(19) Europäisches Patentamt
European Patent Office
Office européen des brevets

(11) **EP 2 644 859 B1**

(12) **EUROPÄISCHE PATENTSCHRIFT**

(45) Veröffentlichungstag und Bekanntmachung des Hinweises auf die Patenterteilung:
**15.09.2021   Patentblatt 2021/37**

(51) Int Cl.:
*F01N 3/20* [(2006.01)]          *F02D 41/02* [(2006.01)]

(21) Anmeldenummer: **12006739.2**

(22) Anmeldetag: **27.09.2012**

(54) **Verfahren zur Anwendung in Verbindung mit einer Abgasnachbehandlungsanlage**

Method for use in connection with an exhaust gas after-treatment system

Procédé destiné à l'utilisation en liaison avec un dispositif de post-traitement de gaz d'échappement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012   DE 102012006449**

(43) Veröffentlichungstag der Anmeldung:
**02.10.2013   Patentblatt 2013/40**

(73) Patentinhaber: **MAN Truck & Bus SE 80995 München (DE)**

(72) Erfinder: **Döring, Andreas 82008 München (DE)**

(74) Vertreter: **v. Bezold & Partner Patentanwälte - PartG mbB Akademiestraße 7 80799 München (DE)**

(56) Entgegenhaltungen:
**EP-A1- 2 166 203          WO-A1-2010/140262
DE-A1-102006 021 089   DE-A1-102009 038 948
US-A1- 2011 047 970     US-A1- 2012 017 567**

**Beschreibung**

Die Erfindung betrifft eine Vorrichtung zur Nachbehandlung von Abgasen von Brennkraftmaschinen, insbesondere von magerlauffähigen Brennkraftmaschinen von Kraftfahrzeugen, gemäß dem Oberbegriff des Patentanspruches 1.

Der Einsatz von SCR-Katalysatoren zur Reduzierung der Stickoxide in einem Abgasstrom einer Brennkraftmaschine ist allgemein bekannt. Im Rahmen der mit diesen SCR-Katalysatoren durchgeführten selektiven katalytischen Reduktion (SCR) wird dem Abgasstrom eine unmittelbar reduzierend wirkende Substanz, wie beispielsweise Ammoniak oder ein Vorprodukt zugeführt, das erst im Abgas reduzierende Substanzen freisetzt. Als Vorprodukt kann beispielsweise eine wässrige Harnstofflösung verwendet werden.

Bei in Kraftfahrzeugen betriebenen Brennkraftmaschinen gestaltet sich die Stickoxidreduzierung mit Hilfe des SCR-Verfahrens deshalb schwierig, weil zum Einen hier wechselnde Betriebsbedingungen vorherrschen, was die mengenmäßige Zumessung des Reduktionsmittels erschwert, zum anderen kann aus Sicherheitsgründen nicht das äußerst reaktive Reduktionsmittel Ammoniak direkt verwendet werden, sondern dieses muss durch die Zersetzung von Ammoniakvorläufersubstanzen, wie Harnstoff, Guanidiniumformiat, Ammoniumcarbamat o.ä. erzeugt werden.

Zudem ist zu beachten, dass einerseits zwar ein möglichst hoher Umsatz an Stickoxiden erreicht werden soll, andererseits aber unnötige Emissionen von unverbrauchtem Reduktionsmittel, wie beispielsweise Ammoniak, vermieden werden.

Das Dokument DE 10 2009 038 948 A1 beschreibt ein Steuersystem, welches ein $NH_3$-Speicherniveau-Bestimmungsmodul und ein Kraftstoffsteuermodul umfasst. Das $NH_3$-Speicherniveau im Abgassystem wird bestimmt und ein Luft/Kraftstoff-Verhältnis in einem Motor auf Basis des $NH_3$-Speicherniveaus gesteuert.

Das Dokument EP 2 166 203 A1 betrifft eine Vorrichtung zur Reinigung eines Abgasstroms einer Brennkraftmaschine eines Kraftfahrzeugs. Die Vorrichtung umfasst einen Partikelabscheider, der in vorgegebenen Abscheiderbereichen eine katalytisch aktive Oberfläche zur Reduktion von Stickoxiden aufweist.

Das Dokument US 2012/0017567 A1 beschreibt einen Verbrennungsmotor, der über einen Abgastrakt mit einem SCR-Katalysator verbunden ist. Vor dem SCR-Katalysator ist ein Dosierer am Abgastrakt angeordnet, der ein Reduktionsmittel zumisst. Ein nicht-stationärer Zustand im Betrieb eines SCR-Katalysators wird erfasst und eine Zielmenge des Reduktionsmittels daraufhin angepasst.

Das Dokument DE 10 2006 021 089 A1 beschreibt eine Technik, um den Überschuss von Stickoxiden oder von Ammoniak im Abgas einer Brennkraftmaschine mit nur einem Sensor zu erkennen. Ein Feed-Verhältnis von Ammoniak und Stickoxiden wird moduliert. Korreliert ein Messsignal des Sensors mit der Modulation des Feed-Verhältnisses gleichsinnig, so wird das Messsignal dem Überschuss von Ammoniak zugeordnet. Repräsentiert dagegen das Messsignal die Modulation des Feed-Verhältnisses gegensinnig, wird das Messsignal dem Überschuss von Stickoxiden zugeordnet.

Das Dokument WO 2010/140262 A1 beschreibt eine Vorrichtung zur Abgasreinigung für einen Verbrennungsmotor. Die Vorrichtung umfasst einen ersten $NO_x$-selektiven Reduktionskatalysator, der in einem Abgastrakt vor einem zweiten $NO_x$-selektiven Reduktionskatalysator angeordnet ist. Eine Menge eines dem ersten $NO_x$-selektiven Reduktionskatalysator zugeführten Reduktionsmittels wird auf Grundlage einer Schätzung für das am zweiten $NO_x$-selektiven Reduktionskatalysator angelagerte Reduktionsmittel gesteuert.

Das Dokument US 2011/0047970 A1 beschreibt eine Abgasnachbehandlung mit einem SCR-Katalysator vor einem $NO_x$-Adsorbtionskatalysator. Der $NO_x$-Adsorbtionskatalysator wird regeneriert, indem eine Sauerstoffkonzentration im Abgasstrom vorrübergehend reduziert wird.

Im Zusammenhang mit der Zersetzung von Harnstoff in Ammoniak ist es bekannt, dass dies unter optimalen Bedingungen, d. h. Temperaturen über 350°C, in zwei Stufen geschieht. Nach

$$(NH_2)_2\,CO \rightarrow NH_3 + HNCO \qquad (1)$$

erfolgt zunächst die Thermolyse, d. h. die thermische Zersetzung von Harnstoff. Anschließend erfolgt nach

$$HNCO + H_2O \rightarrow NH_3 + CO_2 \qquad (2)$$

die Hydrolyse, also die katalytische Zersetzung von Isocyansäure (HNCO) in Ammoniak ($NH_3$) und Kohlendioxid ($CO_2$).

Für die Umsetzung von einem Mol Stickstoffmonoxid ist dabei ein Mol Ammoniak notwendig.

$$4NO+4NH_3+O_2 \rightarrow 4N_2 + 6H_2O \qquad (3)$$

Das Verhältnis zwischen $NH_3$ und $NO_x$ wird als Feedverhältnis $\alpha$ bezeichnet.

$$\alpha = NH_3/NO_X \qquad (4)$$

Bei einem idealen Katalysator bedeutet dies, dass bei einem Feedverhältnis von eins alle Stickoxide reduziert werden, also ein 100%-iger $NO_x$-Umsatz erreicht wird, da für den $NO_x$-Umsatz $X_{NOx}$ gilt:

$$X_{NOx} = \frac{c_{NOx,0} - c_{NOx}}{c_{NOx,0}} \qquad (5)$$

mit:

$C_{NOx,0}$ :   $NO_x$-Rohemissionen [ppm]
$c_{NOx}$ : :   $NO_x$-Emissionen nach Katalysator [ppm]

Übersteigt die Menge des zugeführten Ammoniaks, die der umgesetzten Stickoxide, kommt es zur Emission von unverbrauchtem Ammoniak. Auf Grund dessen Toxizität ist dies unter allen Umständen zu vermeiden.
Um die Vorgänge am Katalysator besser verstehen zu können, sollen kurz einige reaktionstechnische Grundlagen vermittelt werden.
Betrachtet man sich die Reaktion

$$|v_1| \cdot A_1 + |v_2| \cdot A_2 \rightarrow |v_3| \cdot A_3 + |v_4| \cdot A_4 \qquad (6)$$

mit:

A1, A2:   Edukte
A3, A4:   Produkte
$v_i$ :   stöchiometrische Faktoren
$v_i < 0$   für Edukte
$v_i > 0$   für Produkte

so läuft diese mit einer bestimmten Geschwindigkeit, der sogenannten Reaktionsgeschwindigkeit "r" ab (7). Diese ist definiert als die zeitliche Änderung der Komponente "i" bezogen auf ihren stöchiometrischen Faktor. Sie bezieht sich somit auf eine Reaktionsgleichung und ist ohne deren Angabe wertlos.

$$r = \frac{1}{v_i} \cdot \frac{dn_i}{dt} \qquad (7)$$

mit:

$n_i$ :   Molanzahl der Komponente i [mol]
t:   Zeit [s]

Für eine volumenbeständige Reaktion kann man die Molzahländerung "$dn_i$" durch die Konzentrationsänderung "$dc_i$" ersetzen:

$$r = \frac{1}{v_i} \cdot \frac{dc_i}{dt} \qquad (8)$$

mit:

$c_i$ :  Konzentration der Komponente i [mol/m3]

Ist nicht die Geschwindigkeit einer bestimmten Reaktion, sondern die Änderung einer Komponente von Bedeutung, so wird von der Stoffmengenänderungsgeschwindigkeit "R" gesprochen.

$$R_i = \frac{dc_i}{dt} \qquad (9)$$

Für den Fall von N Reaktionen ergibt sich folglich:

$$R_i = \frac{dc_i}{dt} = \sum_{j=1}^{N} \nu_{ij} \cdot r_j \qquad (10)$$

Um Reaktions- und Stoffmengenänderungsgeschwindigkeiten verschiedener Katalysatoren besser untereinander vergleichen zu können, werden sie auf repräsentative Größen, wie z.B. die Katalysatormasse, das Katalysatorvolumen oder die Phasengrenzfläche bezogen.

Um die Zusammenhänge, die die Reaktionsgeschwindigkeit bestimmen, zu beschreiben, gibt es mehrere Ansätze, einer davon ist der sogenannte Potenzansatz, auf den man zurückgreift, wenn der Mechanismus der Reaktion nicht bekannt ist.

$$r = k \cdot c_1^{m_1} \cdot c_2^{m_2} \qquad (11)$$

mit

k:  Geschwindigkeitskonstante der Reaktion
$m_i$ :  Teilordnung bezüglich des Reaktanden Ai, $m_i \in R$

$$m = \sum_{i=1}^{N} m_i$$

m:  : Gesamtordnung der Reaktion

Die Teilordnungen "$m_i$" der Reaktanden werden üblicherweise aus Labormessungen bestimmt.

Die Geschwindigkeit einer Reaktion hängt nicht nur von der Konzentration der Edukte und deren Ordnung ab, sondern natürlich auch noch von der Temperatur "T". Diese ist in obigem Ansatz in der Geschwindigkeitskonstante "k" enthalten.

$$k = k_O \cdot e^{\left(-\frac{E_A}{R \cdot T}\right)} \qquad (12)$$

mit

$k_O$:  Häufigkeits- oder Stoßfaktor [$mol^{1-m} \cdot s^{-1}$]
$E_A$:  Aktivierungsenergie [J/mol]
R:  Allgemeine Gaskonstante: 8,31 J/molK

Für die Stoffmengenänderungsgeschwindigkeit für NO an SCR-Katalysatoren kann ein sogenannter formalkinetischer Ansatz (Potenzansatz) der Form

$$R_{NO} = k \cdot c_{NO}^{m} \cdot c_{NH_3}^{n} \qquad\qquad (13)$$

verwendet werden, wobei "m" üblicherweise den Werte "Eins" und "n" den Wert "Null" annimmt.

Dies hat praktisch zur Folge, dass sich die Stoffmengenänderungsgeschwindigkeit durch Anheben der NO-Konzentration erhöhen lässt, während eine Erhöhung der $NH_3$-Konzentration keinen Einfluss auf diese hat.

Wird den SCR-Katalysatoren ein platinhaltiger NO-Oxidationskatalysator zur Bildung von $NO_2$ vorgeschaltet

$$2NO + O_2 \leftrightarrow 2NO_2 \qquad (14)$$

So kann die SCR-Reaktion erheblich beschleunigt und die Tieftemperaturaktivität merklich angehoben werden.

$$NO + 2NH_3 + NO_2 \rightarrow 2N_2 + 3H_2O \qquad (15)$$

Da das Reduktionsmittel bei der z. B. Verwendung der als AdBlue® bezeichneten Reduktionsflüssigkeit in einer in Wasser gelösten Form vorliegt, muss dieses Wasser vor und während der eigentlichen Thermolyse und Hydrolyse verdampfen. Liegen die Temperaturen bei den beiden vorstehenden Reaktionen unter 350°C bzw. wird nur langsam erhitzt, bildet sich hauptsächlich feste unschmelzbare Cyanursäure durch Trimerisierung der Isocyansäure, was zu festen Ablagerungen oder gar zur Verstopfung des SCR-Katalysators führt. Abhilfe kann hier, wie in der DE 40 38 054 A1 beschrieben, dadurch geschaffen werden, dass der mit dem Reduktionsmittel beladene Abgasstrom über einen Hydrolysekatalysator geführt wird. Die Abgastemperatur, bei der eine quantitative Hydrolyse möglich wird, lässt sich so auf 160°C absenken, solange die zugegebenen Harnstoffmengen nicht zu groß werden. Ein solcher zusätzlicher Hydrolysekatalysator verteuert jedoch die Anordnung zur Abgasnachbehandlung zusätzlich.

Trotz dieser Maßnahmen gelingt es oft nicht, die Bildung von Cyanursäure, Melamin oder anderen unerwünschten festen Reaktionsprodukten zu vermeiden, insbesondere, wenn die $NH_3$-Vorläufersubstanz, wie Harnstoff oder die Harnstoffwasserlösung und das Abgas nicht gleichmäßig über den gesamten Strömungsquerschnitt verteilt sind oder die zugegebenen Mengen zu groß werden. Besonders kritisch ist hierbei, wenn lokal große Mengen an Reduktionsmittel auf Rohrwandungen oder Harnstoffzersetzungskatalysatoren treffen, während sich gleichzeitig an dieser Stelle ein lokales Minimum der Strömungsgeschwindigkeit befindet. Dies hat zur Folge, dass vom Abgas keine ausreichend hohen Wärmemengen zur Verfügung gestellt werden kann, um eine quantitative Zersetzung des Reduktionsmittels in $NH_3$ sicherzustellen. Vielmehr bilden sich an diesen Stellen die bereits erwähnten Ablagerungen aus unerwünschten Reduktionsmittelzersetzungsprodukten.

Verstärkt wird dieser Effekt noch durch die Tatsache, dass in Fahrzeugen nur ein sehr beschränkter Bauraum für die Aufbereitung des Reduktionsmittels zur Verfügung steht, was zur Folge hat, dass speziell bei der Anströmung von Katalysatoren die Einlauflängen sehr kurz ausfallen, was wiederum eine sehr schlechte Gleichverteilung über den Katalysatorquerschnitt auf Grund von Strömungstotzonen, Querschnittssprüngen und/oder Strömungsabrissen nach sich zieht.

All dies hat zur Folge, dass die $NO_x$-Umsätze meist nicht durch die eigentliche SCR-Reaktion, sondern durch die Freisetzung des Ammoniaks aus dessen Vorläufersubstanzen limitiert werden.

Aus DE3604045C1, EP 362 483 A1 sind Verfahren bekannt, anstelle einer kontinuierlich, stationären Ammoniakzugabe eine periodisch schwankende Zugabe von Ammoniak zu verwenden, um so die $NO_x$-Umsätze am SCR-Katalysator anzuheben.

Dabei wird kurzzeitig mehr Ammoniak zugegeben, als unter stationären Bedingungen notwendig wäre, insbesondere kann das Feedverhältnis hier über eins ansteigen, und anschließend die Ammoniakmenge unter die, bei stationären Bedingungen notwendige Menge abgesenkt, bzw. sogar ganz unterbrochen werden.

Der Grund für die bei diesem Verfahren beobachtete Steigerung des $NO_x$-Umsatzes ist in der Eduktinhibierung durch Ammoniak zu sehen, die durch kurzzeitiges Absenken der $NH_3$-Mengen im Abgas und damit auf der Katalysatoroberfläche verringert werden kann.

Dieses Verfahren lässt sich allerdings nicht ohne weiteres auf SCR- Systeme anwenden, die nicht mit reinem Ammoniak, sondern mit Ammoniakvorläufersubstanzen arbeiten, da es auf Grund der periodisch sehr starken Überdosierung meist zur unvollständigen Reduktionsmittelzersetzung und in deren Folge zu Ablagerung in Form von Cyanursäure, Melamin o.ä. kommt.

Aufgabe der Erfindung ist es, ein Verfahren zur Nachbehandlung von Abgasen in einer Abgasanlage von Brennkraftmaschinen, insbesondere von magerlauffähigen Brennkraftmaschinen von Kraftfahrzeugen, vorzuschlagen, die auf einfache und funktionssichere Weise eine funktionell, insbesondere quantitativ verbesserte $NO_x$-Umsetzung im Abgas ermöglicht.

Diese Aufgabe wird gelöst mit den Merkmalen des Patentanspruchs 1. Vorteilhafte und besonders zweckmäßige Weiterbildungen der Erfindung sind Gegenstand der Unteransprüche.

Um die Eduktinhibierung durch, an der Katalysatoroberfläche angelagertes, Ammoniak zu vermindern, wird die $NO_x$-Rohemission periodisch angehoben und abgesenkt, ohne die zugeführte Reduktionsmittelmenge entsprechend, insbesondere proportional, anzupassen. Dies hat zur Folge, dass in den Phasen mit hohen $NO_x$-Rohemissionen, die $NO_x$-Menge die zugeführte Reduktionsmittelmenge übersteigt, so dass das Feedverhältnis absinkt was wiederum zur Folge hat, dass eine Reaktion des $NO_x$ mit dem am Katalysator angelagerten Ammoniak stattfindet, so dass dessen Ammoniakbeladung zurückgeht, da dieses nun verbraucht wird, ohne dass es durch ausreichend $NH_3$ aus der Gasphase ersetzt werden könnte. Zusätzlich wird durch die Erhöhung der $NO_x$-Rohemission, wie oben beschrieben, die Stoffmengenänderungsgeschwindigkeit und dadurch die umgesetzte $NO_x$-Menge angehoben.

In den Phasen mit niedrigen $NO_x$-Rohemissionen dagegen, übersteigt die zugeführte Reduktionsmittelmenge die für den entsprechenden $NO_x$-Umsatz notwendige Menge, so dass ein hohes Feedverhältnis vorliegt, wodurch der Katalysator wieder mit Ammoniak beladen wird.

Der Vorteil des Verfahrens besteht darin, dass es möglich ist, die am Katalysator eingespeicherte $NH_3$-Menge, auch unter für die Reduktionsmittelzersetzung kritischen Einsatzbedingungen, wie niedrige Abgastemperatur und/oder niedriger Abgasmassenstrom, zu verändern, da auf eine Überhöhung der Reduktionsmittelmenge zur Wiederbeladung des Katalysators mit Ammoniak verzichtet werden kann. Zusätzlich wird die umgesetzte $NO_x$-Menge durch Erhöhen der Stoffmengenänderungsgeschwindigkeit angehoben.

Zudem ermöglicht das Verfahren, die Brennkraftmaschine zumindest phasenweise auf einem höheren $NO_x$-Niveau zu betreiben, was üblicherweise einen verbesserten Wirkungsgrad und damit einen geringeren Kraftstoffverbrauch zur Folge hat.

Um das "Entladen" des Katalysators von Ammoniak zu beschleunigen, ist es möglich, in den Phasen mit hohen $NO_x$-Rohemissionen, die zugeführte Reduktionsmittelmenge abzusenken oder gar komplett zu unterbrechen. Selbstverständlich ist es in Betriebsphasen, in denen eine sichere Reduktionsmittelzersetzung gewährleistet ist, auch denkbar, in den Phasen mit geringen $NO_x$-Rohemissionen die zugeführte Reduktionsmittelmenge anzuheben und so die Einlagerung von Ammoniak zu beschleunigen.

Die $NO_x$-Rohemissionen können, wie bereits ausgeführt, durch das Verändern von Betriebsparametern der Brennkraftmaschine variiert werden. Als Betriebsparameter, die unmittelbaren Einfluss auf die $NO_x$-Emissionen haben, kommen unter anderem der Spritzbeginn, das Luft- zu Kraftstoff-Verhältnis (Lambda), der Einspritzdruck, die Anzahl der Einzeleinspritzungen pro Arbeitstakt, die Ansauglufttemperatur und die bei vorhandener Abgasrückführung rückgeführte Abgasmenge (AGR-Rate) in Frage. Dabei haben folgende Änderungen der vorstehend genannten Betriebsparameter einen Anstieg der $NO_x$-Rohemission zur Folge:

- Verschiebung des Spritzbeginns nach früh,
- Verschiebung des Luft- zu Kraftstoff-Verhältnis in Richtung höheren Lambdawerte,
- Erhöhen des Einspritzdrucks,
- Absenken der Anzahl der Einzeleinspritzungen pro Arbeitstakt,
- Anheben der Ansauglufttemperatur, z.B. durch Bypassen des Ladeluftkühler,
- Absenken der Menge des rückgeführten Abgases.

Selbstverständlich sind die Maßnahmen zur Erhöhung bzw. Verringerung der $NO_x$-Rohemission an die übrigen Betriebsbedingungen der Brennkraftmaschine - insbesondere wenn diese in einem Kraftfahrzeug betrieben wird - anzupassen, z.B. an die maximal mögliche Kühlleistung der Motorkühlung, die Leistungsanforderung durch den Fahrer usw..

Da das Ammoniakein- und -ausspeicherverhalten stark von den Betriebsbedingungen der Abgasnachbehandlung, wie Katalysatortemperatur, Ammoniakbeladungsgrad des Katalysators, $NO_x$-Umsatz, $NO_x$-Rohemission, $NO_2$-Emission stromauf des SCR-Katalysators, $NO_x$-Emission nach System, $NH_3$-Emission nach System und zugeführte Reduktionsmittelmenge, abhängt, ist es von Vorteil, die Periodenlänge und/oder das Maß der Überhöhung und/oder das Maß der Absenkung und/oder die Dauer der Überhöhung und/oder die Dauer der Absenkung der $NO_x$-Rohemissionen und/oder der zugeführten Reduktionsmittelmenge von diesen Größen abhängig zu machen. Dabei ist folgender Zusammenhang zu beachten:

Die Periodendauer und/oder das Maß der Überhöhung und/oder das Maß der Absenkung und/oder die Dauer der Überhöhung und/oder die Dauer der Absenkung der $NO_x$-Rohemissionen steigen mit sinkender Katalysatortemperatur und/oder sinkender $NO_2$-Emission stromauf des SCR-Katalysators, wenn das $NO_2/NOx$-Verhältnis kleiner als eins ist, und/oder steigender $NO_2$-Emission stromauf des SCR-Katalysators, wenn das $NO_2/NOx$-Verhältnis größer als eins ist, und/oder sinkender $NH_3$- Emission nach System und/oder sinkender zugeführter Reduktionsmittelmenge und/oder sinkendem $NO_x$-Umsatz und/oder steigender $NO_x$-Emission nach System.

Die Betriebsbedingungen können zum einen direkt über Sensoren oder über Modelle, in Form von mathematischen Funktionen, Kennfeldern und/oder neuronalen Netzen, bestimmt werden. Derartige Techniken sind dem einschlägigen Fachmann seit langem bekannt, so dass sich eine detaillierte Beschreibung erübrigt.

Die Wirkungsweise des vorgeschlagenen Verfahrens soll nachfolgend anhand einiger Beispiele näher erläutert werden, dies erfolgt unter Zuhilfenahme der Figuren. Es zeigen:

Fig. 1    Eine Prinzipdarstellung des Bereiches innerhalb dessen das Feedverhältnis variiert wird

Fig. 2    Beispiel mit einem ersten periodischen Verlauf der $NO_x$-Anhebung/ $NO_x$-Absenkung und konstantem Reduktionsmittelangebot

Fig. 3    $NO_x$-Umsätze in % bei unterschiedlichen Katalysatortemperaturen und einem Verlauf der $NO_x$-Anhebung/ $NO_x$-Absenkung gemäß Fig. 2

Fig 4    Ein zweiter beispielhafter periodischen Verlauf der $NO_x$-Anhebung/ $NO_x$-Absenkung und konstantem Reduktionsmittelangebot

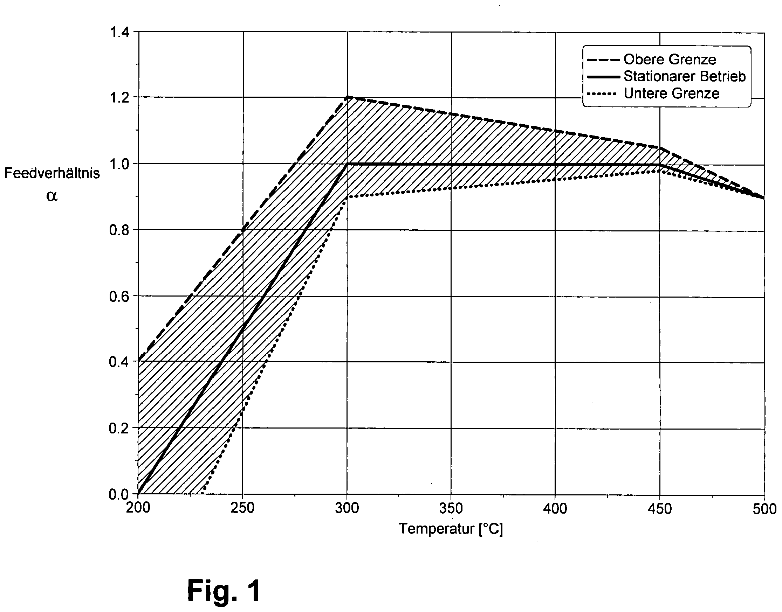

Figur 1 zeigt in einer Prinzipdarstellung die Abhängigkeit von Katalysatortemperatur und Feedverhältnis an einem SCR-Katalysator in einer Brennkraftmaschine im Hinblick auf die maximal erreichbare Umsetzungsrate der Stickoxide, dabei ist auf der Abszisse die Temperatur und auf der Ordinate das Feedverhältnis $\alpha$ eingetragen. Der in durchgezogener Linie dargestellte Kurvenverlauf gibt ein theoretisches Feedverhältnis $\alpha$ an, das bei einer bestimmten Katalysatortemperatur gewählt würde um eine für diese Katalysatortemperatur maximale Umsetzungsrate für die dem Katalysator zugeführten Stickoxiden zu erhalten. Sie stellt damit einen theoretischen stationären Zustand dar. Es wurde nun gefunden, dass dann wenn man das Feedverhältnis $\alpha$ innerhalb bestimmter Grenzen, die sich für einen bestimmten Katalysatortyp in Abhängigkeit von der Katalysatortemperaturen nur experimentell festlegen lassen, variiert, dadurch, dass man die $NO_x$-Rohemission entsprechend verändert, sich die $NO_x$-Umsetzungsrate deutlich anheben lässt. Die angesprochenen Grenzen sind in der Figur 1 ebenfalls temperaturbezogen eingezeichnet, um den prinzipiellen Zusammenhang deutlich zu machen. Dabei stellt die gestrichelte Linie die temperaturbezogene Obergrenze und die punktierte Linie die Untergrenze für die Variationsbereite des Feedverhältnisses $\alpha$ dar. An einem Beispiel erläutert bedeutet dies, dass für eine Katalysatortemperatur von 250°C das Feedverhältnis $\alpha$ um den theoretischen Wert 0,5 in kurzen Abständen, z.B. periodisch, variiert wird und zwar innerhalb der Grenzen von 0,25 und 0,8. Diese Variation wird, wie bereits ausgeführt, dadurch bewerkstellig, dass die $NO_x$-Rohemission der Brennkraftmaschine kurzfristig angehoben und dann wieder abgesenkt wird. Motorische Maßnahmen, die dies bewirken sind dem Fachmann hinlänglich bekannt, es wurde darauf bereits oben eingegangen.

In den Untersuchungen hat es sich als vorteilhaft erwiesen, die $NO_x$-Rohemission und/oder das Feedverhältnis $\alpha$ um wenigstens 20%, bevorzugt um wenigstens 40%, höchst bevorzugt um wenigstens 60% zu variieren.

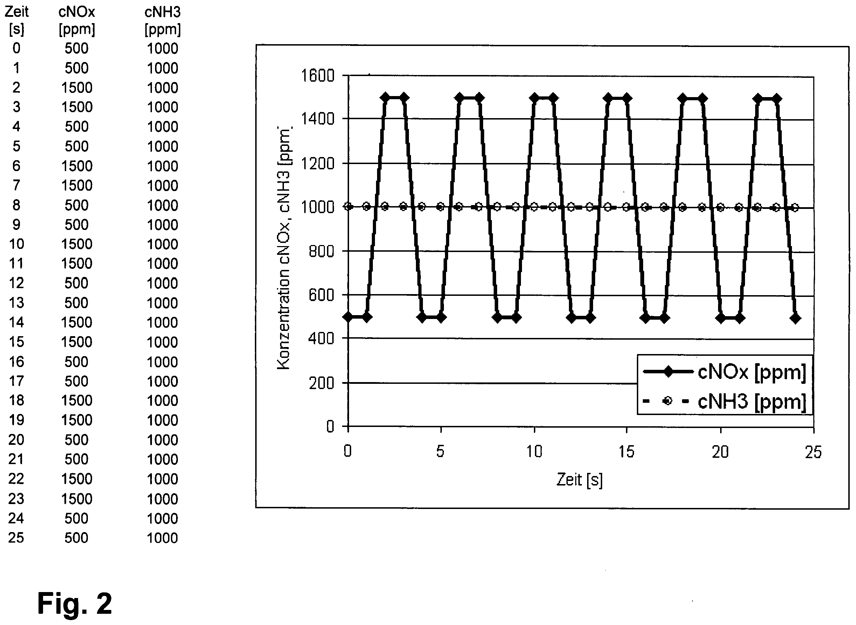

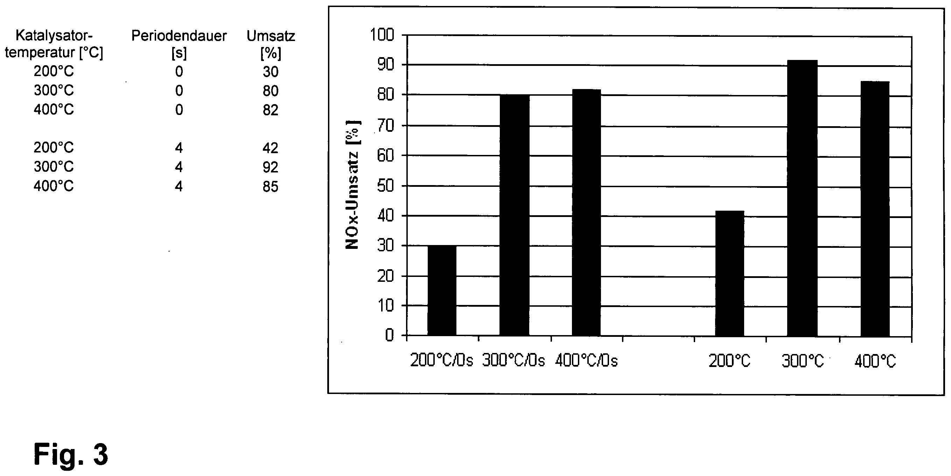

Um den Einfluss der Variation der $NO_x$-Rohemission auf die Umsetzungsrate aufzuzeigen wurden Messungen an einem Probekatalysator durchgeführt, die nachfolgend in Verbindung mit den Figuren 2 und 3 in einem Beispiel beschrieben sind. Bei den Messungen wurde eine Brennkraftmaschine des Typs MAN-D2676 mit externer, gekühlter Abgasrückführung verwendet, in deren Abgastrakt ein SCR-Katalysator mit folgenden Werten verbaut war:

| | |
|---|---|
| - Zelligkeit: | 300cpsi |
| - Aktivkomponente: | $V_2O_5$ auf $WO_3$-stabilisiertem $TiO_2$ |
| - Volumen: | 30,3l |

Die Variation der $NO_x$-Rohemission erfolgte durch Variation der auf die Frischluftseite zurückgeführten Abgasmenge (Erhöhen der AGR-Rate).
Der Motorbetriebspunkte waren 1200rpm/800Nm, 1200rpm/1200Nm und 1200rpm/1700Nm, die daraus resultierenden Katalysatortemperaturen betrugen 200°C, 300°C und 400°C.

Wie der Fig. 2 zu entnehmen, wurde die $NO_x$-Konzentration (in ppm) so variiert, dass sich ein periodischer trapezförmiger Kurvenverlauf ergab, wobei die $NO_x$-Konzentration zwischen den Grenzwerten 500 ppm und 1500 ppm symmetrisch um die $NH_3$-Konzentration von 1000 ppm pendelte, die Periodendauer betrug 4 Sekunden. In Fig. 3 sind die $NO_x$-Umsatzraten in % für die Katalysatortemperaturen 200°C, 300°C und 400°C, festgehalten, die sich bei dem in Fig 2 gewählten Verhältnissen ergaben. Als Vergleich sind in die Fig. 3 weiter die $NO_x$-Umsatzraten in % eingezeichnet, die sich bei nicht variierter $NO_x$-Rohemission, also bei Periodendauer 0 Sekunden und ansonsten gleicher Anordnung und Vorgehensweise ergaben. Wie unschwer erkennbar, lässt sich mit der vorgeschlagenen Verfahrensführung eine deutliche Anhebung der $NO_x$-Umsatzraten, auch bei niedrigen Katalysatortemperaturen, erzielen.

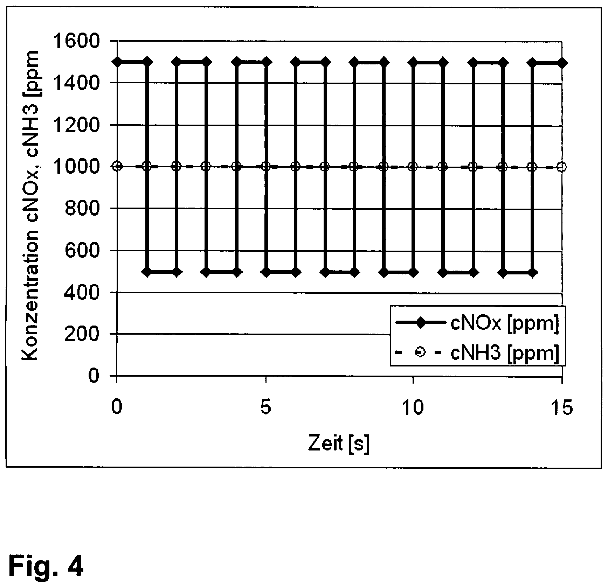

Wie Fig. 4 zeigt kann die $NO_x$-Konzentration (in ppm) natürlich auch nach einem anderen Kurvenverlauf variiert werden. Gezeigt ist hier ein periodischer rechteckiger Kurvenverlauf, wobei die $NO_x$-Konzentration ebenfalls zwischen

den Grenzwerten 500 ppm und 1500 ppm symmetrisch um die $NH_3$-Konzentration von 1000 ppm pendelt.

Auch die Periodendauer die im Beispiel nach Figur 3 zwei Sekunden beträgt, kann als Stellgröße zur Optimierung der $NO_x$-Umsatzrate verwendet werden. Gleiches gilt für die Amplitude der Variation. Das Feedverhältnis $\alpha$ muss nicht zwangsläufig symmetrisch um den theoretischen stationären Wert (durchgezogene Linie in Figur 1) pendeln, es kann sich in der Praxis vielmehr als sinnvoll erweisen, die Absenkungen und Anhebungen der $NO_x$-Rohemission asymmetrisch zu wählen (strichlierte und punktierte Linien in Figur 1). Wie bereits oben betont, kann eine allgemein gültige Variation des Feedverhältnisses $\alpha$ nur in soweit angegeben werden, als der Wert $\alpha$ um einen angenommenen theoretischen Wert in Richtung positiv und negativ variiert wird und diese Variation durch kurzzeitiges Anheben und Absenken der $NO_x$-Rohemission erfolgen muss. Das jeweils optimale Maß der Anhebung bzw. Absenkung ist in hohem Maße abhängig von den jeweils verwendeten Katalysatormaterialien und muss für einen Katalysator eines bestimmten Typs empirisch ermittelt werden.

Kerngedanke der vorgeschlagenen Prozessführung ist es, dass das $NH_3$- zu $NO_x$- Verhältnis (Feedverhältnis $\alpha$) durch Verändern der Stickoxid-Rohemission phasenweise variiert wird, derart, dass das Feedverhältnis $\alpha$ phasenweise um eine theoretischen stationären Wert pendelt.

Selbstverständlich besteht die Möglichkeit, die vorstehende beispielhaft veranschaulichte Prozessführung zu variieren. So besteht die Möglichkeit, die Wirkung des Verfahrens dadurch zu optimieren, dass die zugeführte Reduktionsmittelmenge nicht entsprechend, insbesondere nicht proportional, der periodisch schwankenden $NO_x$- Rohemission angepasst wird. Auch eine Absenkung der Reduktionsmittelmenge ist dabei denkbar, es muss dabei aber sichergestellt sein, z.B. durch eine Temperaturerfassung vor und/oder am SCR-Katalysator, dass ein vorgegebenes Temperaturniveau beim wieder Anheben der Reduktionsmittelmenge nicht unterschritten wird.

Weiter kann es von Vorteil sein, die Periodenlänge und/oder das Maß der Überhöhung und/oder das Maß der Absenkung und/oder die Dauer der Überhöhung und/oder die Dauer der Absenkung der $NO_x$- Rohemissionen in Abhängigkeit von den Betriebsbedingungen der Abgasnachbehandlungsanlage zu wählen. Als Betriebsbedingungen können dabei die Katalysatortemperatur und/oder der Ammoniakbeladungsgrad des Katalysators und/oder der $NO_x$-Umsatz und/oder die $NO_x$- Rohemission und/oder die $NO_2$-Menge stromauf des Partikelfilters und/oder die $NO_x$- Emission stromab zur Abgasnachbehandlungsanlage und/oder die $NH_3$- Emission stromab zur Abgasnachbehandlungsanlage und/oder die zugeführte Reduktionsmittelmenge und/oder die eingespeicherte $NH_3$-Menge und/oder die einspeicherbare $NH_3$-Menge berücksichtigt werden. Bestimmen lassen sich solche Betriebsbedingungen über Sensoren und/oder über Modelle, in Form von mathematischen Funktionen, Kennfeldern und/oder neuronalen Netzen. Derartige Techniken sind dem Fachmann bekannt so dass sich eine ausführliche Beschreibung erübrigt.

Sollte den SCR-Katalysator trotz der vorgeschlagenen Maßnahmen unverbrauchtes $NH_3$ passieren, so kann vorgesehen sein, dieses durch eine auf der Reingasseite angeordnete Beladung mit oxidierend wirkendem Material zu zersetzen und/oder eine Ammoniakspeicherfähigkeit in Richtung der Reingasseite ansteigen zu lassen, um Ammoniakpeaks durch Einspeichern abzupuffern.

## Patentansprüche

1. Verfahren zur Anwendung in Verbindung mit einer Abgasnachbehandlungsanlage, die an einer mit Luftüberschuss betriebenen Brennkraftmaschine betrieben wird, und wobei die Reduktion der Stickoxide dadurch erfolgt, dass ein ammoniakabspaltendes Reduktionsmittel in den Abgasstrom stromauf eines Katalysators, der mit einem Katalysatormaterial zur selektiven katalytischen Reduktion von Stickoxiden beladen ist, beigegeben wird, **dadurch gekennzeichnet, dass** das $NH_3$- zu $NO_x$-Verhältnis ($\alpha$) durch Verändern der Stickoxid-Rohemission der Brennkraftmaschine periodisch variiert wird und die zugeführte Reduktionsmittelmenge nicht entsprechend der periodisch variierten $NO_x$-Rohemission angepasst wird, derart, dass das $NH_3$- zu $NO_x$-Verhältnis ($\alpha$) periodisch um einen vorgegebenen Wert, der einem theoretischen stationären Wert entspricht, pendelt.

2. Verfahren nach Anspruch 1, **dadurch gekennzeichnet, dass** die zugeführte Reduktionsmittelmenge nicht proportional der periodisch variierten $NO_x$-Rohemission angepasst wird.

3. Verfahren nach einem der vorhergehenden Ansprüche, **dadurch gekennzeichnet, dass** die zugeführte Reduktionsmittelmenge verringert oder komplett unterbrochen wird.

4. Verfahren nach einem der vorhergehenden Ansprüche, **dadurch gekennzeichnet, dass** die zugeführte Reduktionsmittelmenge in den Phasen mit hohen $NO_x$- Rohemissionen verringert oder komplett unterbrochen wird.

5. Verfahren nach einem der Ansprüche 1-4, **dadurch gekennzeichnet, dass** die zugeführte Reduktionsmittelmenge in den Phasen mit niedrigen $NO_x$-Emissionen angehoben wird.

**6.** Verfahren nach einem der Ansprüche 1-5, **dadurch gekennzeichnet, dass** die $NO_x$-Rohemissionen durch Ändern des Kraftstoff-Einspritzbeginns und/oder des Luftzu Kraftstoffverhältnisses und/oder des Kraftstoff-Einspritzdrucks und/oder der Anzahl und zeitlichen Abfolge der Kraftstoff-Einzeleinspritzungen während eines Arbeitstaktes und/oder der rückgeführten Abgasmenge und/oder der Ansauglufttemperatur angehoben wird.

**7.** Verfahren nach einem der Ansprüche 1-6, **dadurch gekennzeichnet, dass** die Periodenlänge und/oder das Maß der Überhöhung und/oder das Maß der Absenkung und/oder die Dauer der Überhöhung und/oder die Dauer der Absenkung der $NO_x$- Rohemissionen in Abhängigkeit von den Betriebsbedingungen der Abgasnachbehandlungsanlage gewählt wird.

**8.** Verfahren nach Anspruch 7, **dadurch gekennzeichnet, dass** als Betriebsbedingungen die Katalysatortemperatur und/oder der Ammoniakbeladungsgrad des Katalysators und/oder der $NO_x$- Umsatz und/oder die $NO_x$- Rohemission und/oder die $NO_2$-Menge stromauf des SCR-Katalysators und/oder die $NO_x$- Emission stromab zur Abgasnachbehandlungsanlage und/oder die $NH_3$- Emission stromab zur Abgasnachbehandlungsanlage und/oder die zugeführte Reduktionsmittelmenge und/oder die eingespeicherten $NH_3$-Menge und/oder der einspeicherbare $NH_3$-Menge berücksichtigt werden.

**9.** Verfahren nach einem der Ansprüche 7 oder 8, **dadurch gekennzeichnet, dass** die Betriebsbedingungen der Abgasnachbehandlungsanlage über Sensoren und/oder über Modelle, in Form von mathematischen Funktionen, Kennfeldern und/oder neuronalen Netzen, bestimmt werden.

**10.** Verfahren nach einem der vorstehend genannten Ansprüche, **dadurch gekennzeichnet, dass** den SCR-Katalysator passierendes unverbrauchtes $NH_3$ durch eine auf der Reingasseite des SCR-Katalysator angeordnete Beladung mit oxidativ wirkenden Material zersetzt wird.

**11.** Verfahren nach einem der vorstehend genannten Ansprüche, **dadurch gekennzeichnet, dass** die $NO_x$-Rohemission und/oder das $NH_3$- zu $NO_x$- Verhältnis ($\alpha$) um wenigstens 20%, bevorzugt um wenigstens 40%, höchst bevorzugt um wenigstens 60% variiert werden.

**12.** Anordnung derart konfiguriert, das Verfahren nach einem der Ansprüche 1 bis 11 durchzuführen, **dadurch gekennzeichnet, dass** die Beladung des SCR-Katalysators mit SCRaktivem Material so vorgenommen ist, dass die Ammoniak-Speicherfähigkeit des SCR-Katalysators zur Reingasseite hin ansteigt.

**Claims**

**1.** A process for use in connection with an exhaust gas aftertreatment system which is operated on an internal combustion engine operated with surplus air and wherein the reduction of nitrogen oxides is effected when an ammoniaeliminating reductant is added to the exhaust gas flow upstream of a catalyst laden with a catalyst material for selective catalytic reduction of nitrogen oxides, **characterized in that** the $NH_3$ to $NO_X$ ratio ($\alpha$) is periodically varied by altering the nitrogen oxide raw emission of the internal combustion engine and the supplied reductant amount is not adapted according to the periodically varied $NO_x$ raw emission such that the $NH_3$ to $NO_X$ ratio ($\alpha$) periodically oscillates about a predetermined value corresponding to a theoretical steady-state value.

**2.** The process according to Claim 1, **characterized in that** the supplied reductant amount is not adapted proportionally to the periodically varied $NO_X$ raw emission.

**3.** The process according to any of the preceding claims, **characterized in that** the supplied reductant amount is reduced or completely interrupted.

**4.** The process according to any of the preceding claims, **characterized in that** the supplied reductant amount is reduced or completely interrupted in the phases with high $NO_X$ raw emissions.

**5.** The process according to any of Claims 1-4, **characterized in that** the supplied reductant amount is increased in the phases with low $NO_X$ emissions.

**6.** The process according to any of Claims 1-5, **characterized in that** the $NO_X$ raw emissions are increased by altering the commencement of fuel injection and/or the fuel injection pressure and/or the number and temporal sequence of the individual fuel injections during a power stroke and/or the recirculated exhaust gas amount and/or the intake air temperature.

7. The process according to any of Claims 1-6, **characterized in that** the period length and/or the extent of the elevation and/or the extent of the reduction and/or the duration of the elevation and/or the duration of the reduction of the $NO_X$ raw emissions is selected according to the operating conditions of the exhaust gas aftertreatment system.

8. The process according to Claim 7, **characterized in that** the operating conditions taken into account include the catalyst temperature and/or the level of ammonia loading of the catalyst and/or the $NO_X$ conversion and/or the $NO_X$ raw emission and/or the $NO_2$ amount upstream of the SCR catalyst and/or the $NO_X$ emission downstream of the exhaust gas aftertreatment system and/or the $NH_3$ emission downstream of the exhaust gas aftertreatment system and/or the supplied reductant amount and/or the stored $NH_3$ amount and/or the storable $NH_3$ amount.

9. The process according to either of Claims 7 and 8, **characterized in that** the operating conditions of the exhaust gas aftertreatment system are determined via sensors and/or via models in the form of mathematical functions, engine maps and/or neural networks.

10. The process according to any of the preceding claims, **characterized in that** unused $NH_3$ passing through the SCR catalyst is decomposed by a loading with oxidative material arranged on the clean gas side of the SCR catalyst.

11. The process according to any of the preceding claims, **characterized in that** the $NO_x$ raw emission and/or the $NH_3$ to $NO_X$ ratio ($\alpha$) are varied by at least 20%, preferably by at least 40%, most preferably by at least 60%.

12. An assembly configured for performing the process according to any of Claims 1 to 11, **characterized in that** the loading of the SCR catalyst with SCR-active material is undertaken such that the ammonia storage capacity of the SCR catalyst increases towards the clean gas side.

**Revendications**

1. Procédé d'utilisation en liaison avec un système de post-traitement de gaz d'échappement qui fonctionne sur un moteur à combustion interne fonctionnant en excès d'air, et la réduction des oxydes d'azote étant effectuée par ajout d'un agent réducteur, libérant de l'ammoniac, dans le flux de gaz d'échappement en amont d'un catalyseur qui est chargé avec un matériau catalyseur destiné à la réduction catalytique sélective d'oxydes d'azote, **caractérisé en ce que** le rapport $NH_3$ à $NO_x$ ($\alpha$) varie périodiquement en raison de la variation des émissions brutes d'oxydes d'azote du moteur à combustion interne et **en ce que** la quantité d'agent réducteur fournie n'est pas adaptée en fonction des émissions brutes de $NO_x$ qui varient périodiquement de sorte que le rapport $NH_3$ à $NO_x$ ($\alpha$) oscille périodiquement autour d'une valeur spécifiée qui correspond à une valeur théorique en régime permanent.

2. Procédé selon la revendication 1, **caractérisé en ce que** la quantité d'agent réducteur fournie n'est pas adaptée proportionnellement aux émissions brutes de $NO_x$ qui varient périodiquement.

3. Procédé selon l'une des revendications précédentes, **caractérisé en ce que** la quantité d'agent réducteur fournie est réduite ou totalement interrompue.

4. Procédé selon l'une des revendications précédentes, **caractérisé en ce que** la quantité d'agent réducteur fournie est réduite ou totalement interrompue dans les phases à fortes émissions brutes de $NO_x$.

5. Procédé selon l'une des revendications 1 à 4, **caractérisé en ce que** la quantité d'agent réducteur fournie est augmentée dans les phases à faibles émissions de $NO_x$.

6. Procédé selon l'une des revendications 1 à 5, **caractérisé en ce que** les émissions brutes de $NO_x$ sont augmentées par modification du début d'injection de carburant et/ou du rapport air/carburant et/ou de la pression d'injection de carburant et/ou du nombre et de la séquence temporelle des injections de carburant individuelles au cours d'un cycle de travail et/ou de la quantité de gaz d'échappement mise en recirculation et/ou de la température de l'air d'admission.

7. Procédé selon l'une des revendications 1 à 6, **caractérisé en ce que** la durée de la période et/ou l'étendue de la surélévation et/ou l'étendue de la diminution et/ou la durée de la surélévation et/ou la durée de la diminution des émissions brutes de $NO_x$ sont sélectionnées en fonction des conditions de fonctionnement du système de post-traitement de gaz d'échappement.

8. Procédé selon la revendication 7, **caractérisé en ce que** la température du catalyseur et/ou le taux de charge en ammoniac du catalyseur et/ou la conversion de $NO_x$ et/ou l'émission brute de $NO_x$ et/ou la quantité de $NO_2$ en amont du catalyseur SCR et/ou l'émission de $NO_x$ en aval du système de post-traitement de gaz d'échappement et/ou l'émission de $NH_3$ en aval du système de post-traitement de gaz d'échappement et/ou la quantité d'agent réducteur fournie et/ou la quantité de $NH_3$ stockée et/ou la quantité de $NH_3$ stockable sont pris en compte comme conditions de fonctionnement.

9. Procédé selon l'une des revendications 7 ou 8, **caractérisé en ce que** les conditions de fonctionnement du système de post-traitement de gaz d'échappement sont déterminées par le biais de capteurs et/ou de modèles sous forme de fonctions mathématiques, de diagrammes caractéristiques et/ou de réseaux de neurones.

10. Procédé selon l'une des revendications précédentes, **caractérisé en ce que** le $NH_3$ non utilisé passant par le catalyseur SCR est décomposé par une charge de matière oxydante disposée du côté gaz propres du catalyseur SCR.

11. Procédé selon l'une des revendications précédentes, **caractérisé en ce que** l'on fait varier l'émission brute de $NO_x$ et/ou le rapport $NH_3$ à $NO_x$ ($\alpha$) d'au moins 20 %, de préférence d'au moins 40 %, de manière tout particulièrement préférée d'au moins 60 %.

12. Dispositif conçu pour mettre en œuvre le procédé selon l'une des revendications 1 à 11, **caractérisé en ce que** la charge du catalyseur SCR avec du matériau SCR actif est effectuée de telle sorte que la capacité de stockage d'ammoniac du catalyseur SCR augmente en direction du côté gaz propres.

**Fig. 1**

EP 2 644 859 B1

Fig. 2

| Zeit [s] | cNOx [ppm] | cNH3 [ppm] |
|----------|------------|------------|
| 0 | 500 | 1000 |
| 1 | 500 | 1000 |
| 2 | 1500 | 1000 |
| 3 | 1500 | 1000 |
| 4 | 500 | 1000 |
| 5 | 500 | 1000 |
| 6 | 1500 | 1000 |
| 7 | 1500 | 1000 |
| 8 | 500 | 1000 |
| 9 | 500 | 1000 |
| 10 | 1500 | 1000 |
| 11 | 1500 | 1000 |
| 12 | 500 | 1000 |
| 13 | 500 | 1000 |
| 14 | 1500 | 1000 |
| 15 | 1500 | 1000 |
| 16 | 500 | 1000 |
| 17 | 500 | 1000 |
| 18 | 1500 | 1000 |
| 19 | 1500 | 1000 |
| 20 | 500 | 1000 |
| 21 | 500 | 1000 |
| 22 | 1500 | 1000 |
| 23 | 1500 | 1000 |
| 24 | 500 | 1000 |
| 25 | 500 | 1000 |

| Katalysator-temperatur [°C] | Periodendauer [s] | Umsatz [%] |
|---|---|---|
| 200°C | 0 | 30 |
| 300°C | 0 | 80 |
| 400°C | 0 | 82 |
| 200°C | 4 | 42 |
| 300°C | 4 | 92 |
| 400°C | 4 | 85 |

**Fig. 3**

EP 2 644 859 B1

**Fig. 4**

**EP 2 644 859 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009038948 A1
- EP 2166203 A1
- US 20120017567 A1
- DE 102006021089 A1
- WO 2010140262 A1
- US 20110047970 A1
- DE 4038054 A1
- DE 3604045 C1
- EP 362483 A1